# EUROPEAN PATENT APPLICATION

(11) **EP 2 168 678 A1**
(43) Date of publication of application: **31.03.2010**
(21) Application number: 09252019.6
(22) Date of filing: 19.08.2009
(51) Int. Cl.: B01J 21/04, B01J 21/10, B01J 32/00, B01J 35/00, B01J 35/04, B01J 37/02

(54) **Catalyst carrier**

(30) Priority: 03.09.2008 JP 2008225969
(71) Applicant: Bridgestone Corporation, Tokyo 104-8340 (JP); CHIYODA CORPORATION, Yokohama-shi Kanagawa 230-8601 (JP)
(72) Inventor: Shigyo, Yasushige, Yokohama-shi, Kanagawa 244-0812 (JP); Yamamoto, Tomohiro, Yokohama-shi, Kanagawa 244-0812 (JP); Imagawa, Kenichi, Yokohama-shi, Kanagawa 230-8601 (JP); Minami, Takeshi, Yokohama-shi, Kanagawa 230-8601 (JP)
(74) Representative: Whalley, Kevin

(57) **Abstract**

A catalyst carrier which includes a catalyst support layer containing an alkaline earth metal and/or an alkali metal disposed on an alumina substrate. The alkaline earth metal and/or the alkali metal is suppressed or prevented from diffusing into the substrate to react with alumina in the substrate. A catalyst support layer 3 that contains an alkaline earth metal and/or an alkali metal is formed on a surface of an alumina substrate 1 having a three-dimensional network structure. A zirconia layer 2 consisting of zirconia and/or stabilized zirconia is disposed between the substrate 1 and the catalyst support layer 3. The zirconia layer 2 has a thickness of 3 µm or more in a region of at least 65% of the substrate surface. The zirconia layer suppresses or prevents the alkaline earth metal and/or the alkali metal in the catalyst support layer from diffusing into the substrate.

## Description

### Field of the Invention

The present invention relates to a catalyst carrier and, more particularly, to a catalyst carrier in which a catalyst support layer containing an alkaline earth metal and/or an alkali metal is formed on a surface of an alumina substrate.

### Background of the Invention

Alumina catalyst carriers have been widely used in various reactions in a chemical industry. As alumina catalyst carriers are easy to mold, catalyst carriers having a low pressure loss, such as honeycomb carriers and foam carriers, can be manufactured. However, since alumina has weak acidic sites on the surface thereof, a side reaction tends to occur.

Catalyst carriers which contain an alkaline earth metal and/or an alkali metal have also been used widely. For example, Japanese Unexamined Patent Application Publication No. 2005-199264 describes a catalyst carrier manufactured by mixing a first component of an alkaline earth metal oxide, a second component of an oxide of at least one element selected from the group consisting of scandium, yttrium, and lanthanoid, and a third component of zirconia or a substance mainly composed of zirconia, followed by molding and firing.

This catalyst carrier is preferably used as a catalyst carrier for use in production of synthesis gas mainly composed of hydrogen and carbon monoxide through a reforming reaction of natural gas. Synthesis gas serves as a raw material used for manufacture of various products or as a raw material used for production of clean fuels, such as methanol, synthetic gasoline, and dimethyl ether (DME).

However, the catalyst carrier according to Japanese Unexamined Patent Application Publication No. 2005-199264 is difficult to mold and is difficult to form into a porous carrier, such as a honeycomb carrier or a foam carrier.

Japanese Unexamined Patent Application Publication No. 2005-199264 describes a catalyst carrier that includes a substrate formed of ceramic foam, such as alumina foam, and a covering layer containing an alkaline earth metal oxide formed on a surface of the substrate. Since ceramic foam has a low pressure loss, a catalyst carrier including a ceramic foam substrate also has a low pressure loss.

As in Japanese Unexamined Patent Application Publication No. 2005-199264, in the formation of a catalyst support layer containing an alkaline earth metal oxide on an alumina substrate, part of the alkaline earth metal in the catalyst support layer diffuses or migrates into the substrate to react with alumina in the substrate, resulting in a decrease in the strength of the substrate and a decrease in reactivity in association with a decrease in the catalyst component in the catalyst support layer.

Japanese Unexamined Patent Application Publication No. 50-90590 mentions that a reaction between alumina and an alkaline earth metal is particularly noticeable when the alumina is γ-alumina. However, under very high temperature conditions as in the reforming of natural gas described above, even heat-resistant α-alumina reacts with an alkaline earth metal, resulting in a decrease in a strength or reactivity of the carrier.

### Summary of the Invention

It is an object of the present invention to provide a catalyst carrier in which a catalyst support layer containing an alkaline earth metal and/or an alkali metal is formed on a surface of an alumina substrate, wherein the alkaline earth metal and/or the alkali metal is suppressed or prevented from migrating or diffusing into the substrate to react with alumina in the substrate.

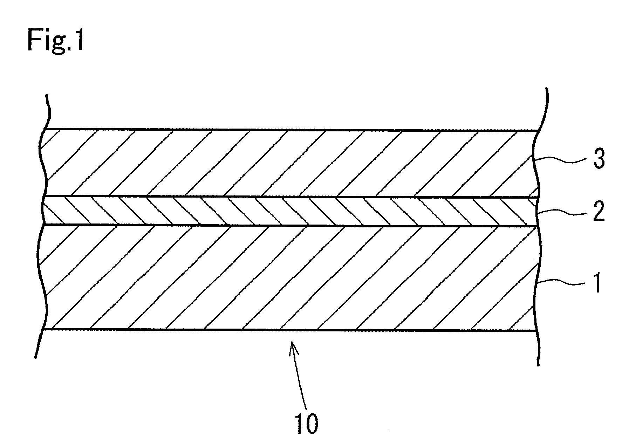

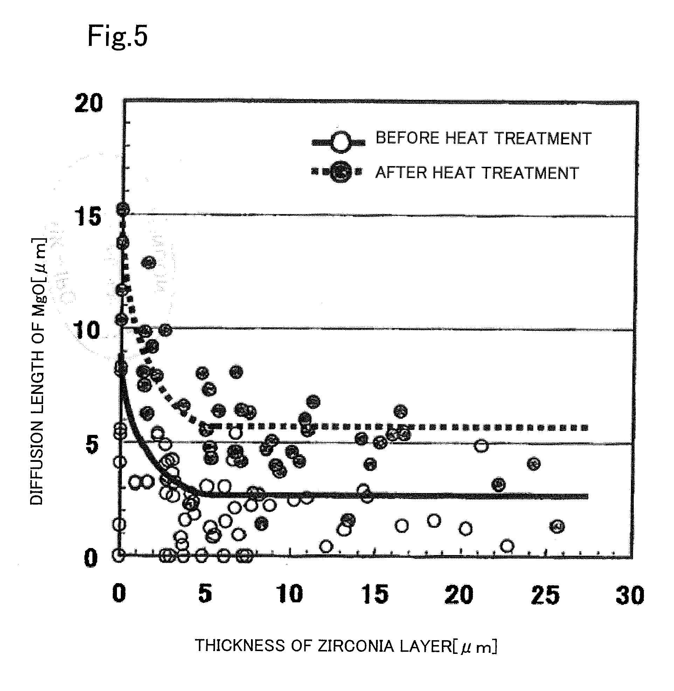

As a result of extensive investigations, the present inventors completed the present invention by finding that, as illustrated in Fig. 1 described below, formation of a zirconia layer 2 having very low reactivity to a substrate between a substrate 1 and a catalyst support layer 3 is effective to prevent the reaction between an alkaline earth metal or an alkali metal and the substrate; in particular, as illustrated in Fig. 5 described below, it is effective to include at least a predetermined proportion of a zirconia layer having a thickness of 3 µm or more to the surface of the substrate.

A catalyst carrier according to the present invention in which a catalyst support layer containing at least one of an alkaline earth metal and an alkali metal is formed on a surface of an alumina substrate having a three-dimensional network structure includes a zirconia layer consisting of at least one of zirconia and stabilized zirconia disposed between the substrate and the catalyst support layer, wherein a portion of the zirconia layer having a thickness of 3 µm or more accounts for at least 65% of the substrate surface.

The zirconia layer has preferably an average thickness in the range of 3 to 30 µm.

The zirconia layer is preferabe to be formed from a raw material having a particle size of 5 µm or less.

The substrate preferably consists of α-alumina.

The substrate preferably has a network structure having 5 to 40 cells per inch.

It is preferable that the catalyst support layer contains an oxide of at least one alkaline earth metal selected from the group consisting of magnesium (Mg), calcium (Ca), strontium (Sr), and barium (Ba).

Preferably the catalyst support layer contains a first component, a second component, and a third component, the first component being an oxide of at least one alkaline earth metal selected from the group consisting of magnesium (Mg), calcium (Ca), strontium (Sr), and barium (Ba), the second component being an oxide of at least one element selected from the group consisting of scandium (Sc), yttrium (Y), and lanthanoid, and the third component being zirconia or a solid electrolyte substance mainly composed of zirconia.

The zirconia layer preferably consists of at least one selected from the group consisting of zirconia, calcia-stabilized zirconia, magnesia-stabilized zirconia, yttria-stabilized zirconia, and ceria-stabilized zirconia.

In the catalyst carrier according to the present invention, the zirconia layer is formed between the substrate and the catalyst support layer, and the zirconia layer has low reactivity to an alkaline earth metal and/or an alkali metal. Thus, the zirconia layer suppresses or prevents an alkaline earth metal and/or an alkali metal in the catalyst support layer from diffusing into the substrate.

Since the zirconia layer has a thickness of 3 µm or more in a region of at least 65% of the substrate surface, the zirconia layer can reliably suppress or prevent an alkaline earth metal and/or an alkali metal from diffusing into the substrate.

In the present invention, the zirconia layer having an average thickness in the range of 3 to 30 µm does not clog the pores of the substrate and can reliably suppress or prevent an alkaline earth metal and/or an alkali metal from diffusing into the substrate.

In the present invention, the zirconia layer formed from a raw material having a particle size of 5 µm or less can have a uniform thickness.

In the present invention, the substrate preferably consists of α-alumina. α-alumina has a higher strength and lower reactivity to an alkaline earth metal and an alkali metal than γ-alumina.

### Brief Description of Drawings

Fig. 1 is a schematic cross-sectional view of a catalyst carrier 10 according to an embodiment.
Fig. 2 is a SEM photograph of a cross section of a sample according to Example 1.
Fig. 3 is a graph showing an EPMA (electron probe micro analyzer) elementary analysis of a square frame in Fig. 2.

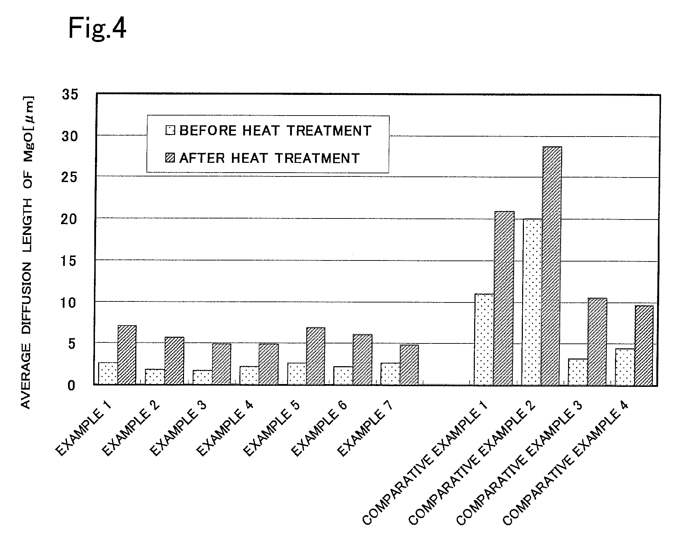

Fig. 4 is a graph showing measurements of the average diffusion length of MgO before and after heat treatment tests in Examples 1 to 7 and Comparative Examples 1 to 4.
Fig. 5 is a graph showing the relationship between the thickness of a zirconia layer and the diffusion length of MgO before and after a heat resistance test in Examples 1 to 6 and Comparative Example 4.

### Detailed Description

A catalyst carrier according to an embodiment of the present invention will be described in detail below with reference to the drawings.

Fig. 1 is a schematic cross-sectional view of a catalyst carrier 10 according to an embodiment of the present invention. The catalyst carrier 10 includes a substrate 1, a zirconia layer 2 formed on the substrate 1, and a catalyst support layer 3 formed on the zirconia layer 2. The catalyst support layer 3 supports a catalyst component.

The substrate 1 consists of a ceramic foam having a three-dimensional network structure. The material of the substrate 1 is alumina, such as α-alumina, γ-alumina, cordierite, alumina/cordierite, mullite, or alumina/zirconia. Among them, α-alumina is preferable for use under suitable temperature conditions.

Since the ceramic foam is prepared by using a reticulated flexible polyurethane foam or the like as a starting material, the ceramic foam consists of a porous body having a three-dimensional network structure, which includes uniform open cells having a characteristic pore structure. The basic structure of the ceramic foam is manufactured by coating a reticulated urethane foam skeleton with a ceramic raw material and incinerating the urethane foam by firing to leave only a ceramic portion. Thus, the ceramic foam has a porosity as high as 80% to 90%, and characteristics of the ceramic foam including heat resistance, impact resistance, strength, and pressure loss can be controlled by changing the kind of ceramic materials.

The network structure of the ceramic foam in the present invention has approximately 5 to 40 cells per inch (average number of air bubbles per 25.4 mm on a straight line; hereinafter also referred to as CPI), preferably approximately 10 to 30 cells per inch. The CPI value is determined by counting air bubbles on a photomicrograph of the ceramic foam.

The zirconia layer 2 is formed on the substrate 1.

Preferably, the raw material of the zirconia layer 2 is at least one selected from the group consisting of zirconia, calcia-stabilized zirconia, magnesia-stabilized zirconia, yttria-stabilized zirconia, scandia-stabilized zirconia, and ceria-stabilized zirconia.

The raw material used for the formation of the zirconia layer 2 may be a material that forms the zirconia layer 2 by calcining in an oxidizing atmosphere, for example, zirconia, stabilized zirconia, zirconium hydroxide, zirconium nitrate, zirconium carbonate, zirconium chloride, or zirconium acetate, and is preferably zirconia and/or stabilized zirconia.

The raw material used for the formation of the zirconia layer 2 preferably has an average particle size of 5 µm or less, more preferably 1 µm or less. When a particle size is 5 µm or less, a uniform and even zirconia layer 2 can be formed on the substrate 1 having a three-dimensional network structure. In the present invention, the average particle size is determined by dynamic light scattering.

It is preferable to form the zirconia layer 2 on the substrate 1, for example, by the following method. That is, slurry that contains a predetermined ratio of a raw material used for the formation of the zirconia layer 2 is prepared. The procedures of dipping the substrate 1 in the slurry, pulling up the substrate 1, and drying the substrate 1 are performed once or a plurality of times to form a film. (This film before calcining is hereinafter also referred to as a green film.) The slurry suitably has a concentration in the range of approximately 20% to 50% by weight. The slurry may contain a thickening agent or a dispersing agent. The zirconia layer 2 is then formed by calcining at a temperature of 1000°C or more, preferably in the range of 1200°C to 1500°C. When the zirconia layer 2. is formed on a large substrate, the slurry may be sprayed over the substrate 1 to form the green film.

A portion of the zirconia layer 2 having a thickness of 3 µm or more accounts for at least 65%, preferably at least 85%, of the surface of the substrate 1. When the portion of the zirconia layer 2 having a thickness of 3 µm or more accounts for less than 65%, an alkaline earth metal and/or an alkali metal in the catalyst support layer 3 easily diffuses into the substrate 1. The zirconia layer 2 preferably has an average thickness in the range of 3 to 30 µm, more preferably in the range of 5 to 30 µm. When an average thickness is below 3 µm, an alkaline earth metal and/or an alkali metal in the catalyst support layer 3 easily diffuses into the substrate 1. A zirconia layer having an average thickness above 30 µm may clog the pores of the catalyst carrier 10, resulting in large pressure loss.

The thickness of the zirconia layer 2 is determined by measuring the thickness of the zirconia layer 2 in a cross section analysis of a catalyst carrier by EPMA, followed by correction in a direction perpendicular to an alumina substrate based on a SEM photograph of the cross section.

The weight percentage of the zirconia layer 2 in the catalyst carrier 10 is preferably 2% by weight or more, more preferably in the range of 5% to 40% by weight. Below 2% by weight, an alkaline earth metal and/or an alkali metal in the catalyst support layer 3 easily diffuses into the substrate 1. Above 40% by weight, the catalyst carrier 10 has a large pressure loss, the catalyst support layer 3 decreases, and thereby the catalyst supporting function deteriorates.

The catalyst support layer 3 that contains an alkaline earth metal and/or an alkali metal is formed on the zirconia layer 2.

As the alkaline earth metal, at least one selected from the group consisting of magnesium (Mg), calcium (Ca), strontium (Sr), and barium (Ba) is suitably used.

As the alkali metal, at least one selected from the group consisting of potassium (K), sodium (Na), cesium (Cs), and lithium (Li) is suitably used.

The catalyst support layer 3 may contain the following first, second, and third components.

The first component is an oxide of at least one alkaline earth metal selected from the group consisting of magnesium (Mg), calcium (Ca), strontium (Sr), and barium (Ba). Among these oxides, magnesia (MgO) or magnesia containing calcia (CaO) is preferable.

The second component is an oxide of at least one element selected from the group consisting of scandium (Sc), yttrium (Y), and lanthanoid. More specifically, the second component is an oxide of at least one element selected from the group consisting of scandium (Sc), yttrium (Y), lanthanum (La), cerium (Ce), praseodymium (Pr), neodymium (Nd), and samarium (Sm). Among these oxides, cerium (Ce) oxide is preferable.

The third component is at least one selected from the group consisting of zirconia, calcia-stabilized zirconia, magnesia-stabilized zirconia, yttria-stabilized zirconia, scandia-stabilized zirconia, and ceria-stabilized zirconia. Among these, zirconia or calcia-stabilized zirconia is preferable.

It is preferable to form the catalyst support layer 3 composed of these three components on the zirconia layer 2, for example, by the following method. That is, slurry that contains a predetermined ratio of raw materials of the first component, the second component, and the third component in the form of hydroxide, oxide, nitrate, carbonate, or acetate thereof is prepared. The procedures of dipping a surface of the substrate 1 on which the zirconia layer 2 is formed in the slurry, pulling up the substrate 1, and drying the substrate 1 are performed once or a plurality of times to form a film (green film). The slurry suitably has a concentration in the range of approximately 20% to 50% by weight. The catalyst support layer 3 is then formed by calcining at a temperature of 1000°C or more, preferably in the range of 1200°C to 1500°C. When the catalyst support layer 3 is formed on a large substrate on which the zirconia layer 2 has been formed, the slurry may be sprayed over the substrate 1 on which the zirconia layer 2 has been formed to form the green film. Each film of these three components may be formed independently. For example, the formation of a MgO film may be followed by the formation of CeO₂ and ZrO₂ films, or this procedure may be reversed. Alternatively, each of the slurries of these three components may be sequentially coated to form their respective films, and this procedure may be performed a plurality of times.

The catalyst carrier 10 thus formed may be carried with an active metal suitable for an target reaction to produce a catalyst. Examples of the active metal include rhodium and platinum. The active metal is suitably carried on the catalyst carrier 10 by impregnating a solution of a salt of the active metal, drying the carrier impregnating with the solution, and then calcining the carrier.

### EXAMPLES

The present invention will be further described in the following examples and comparative examples.

### [Manufacture of Catalyst Carrier]

### EXAMPLES 1 to 4

A catalyst carrier having a structure illustrated in Fig. 1 was produced in the following manner.

First, a disc-shaped α-alumina foam having an outer diameter of 16 mm and a thickness of 5 mm (M-6, manufactured by Bridgestone Corporation. The number of cells was 30 cells per inch.) was prepared as a porous substrate.

As a raw material used for forming a zirconia layer, Y₂O₃-stabilized ZrO₂ ("TZ-3Y-E", manufactured by Tosoh Co.,Ltd., average particle size:10 µm) was wet-milled to a particle size of 1.0 µm or less in a ball mill for 24 hours.

The procedures of dipping the substrate in slurry (concentration: 40% by weight) of the raw material of the zirconia layer, pulling up the substrate, and drying the substrate were performed a plurality of times to form an Y₂O₃-stabilized ZrO₂ green film on the substrate. The substrate was then calcined at 1400°C in air for two hours to form a zirconia layer having a thickness and weight (weight ratio) shown in Table 1 on the substrate.

A sintered compound consisting of catalyst carrier components having a weight ratio of CeO₂:ZrO₂:MgO = 1:1:1 was milled to prepare slurry (concentration: 40%) for forming a catalyst support layer. The slurry was coated on the zirconia layer in the same manner as described above to form a green film of the catalyst carrier components on the zirconia layer. The substrate having the zirconia layer and the green film was calcined at 1320°C in air for two hours to form a catalyst carrier having a catalyst support layer of a weight ratio shown in Table 1.

### EXAMPLES 5 and 6

Catalyst carriers were manufactured in the same manner as in Examples 1 to 4 except that α-alumina foams (M-6, manufactured by Bridgestone Corporation. The shape and dimensions were the same as in Examples 1 to 4.) having 34 cells per inch for Example 5 and 20 cells per inch for Example 6 were used. Table 1 shows the thickness and the weight ratio of the zirconia layer and the weight ratio of the catalyst support layer.

### EXAMPLE 7

A catalyst carrier was manufactured in the same manner as in Example 1 except that the raw material for forming the zirconia layer was used without particle size controlling, such as fine grinding. Table 1 shows the thickness and the weight ratio of the zirconia layer and the weight ratio of the catalyst support layer.

### COMPARATIVE EXAMPLE 1

A catalyst carrier was manufactured in the same manner as in Example 1 except that a catalyst support layer was formed directly on a substrate without forming a zirconia layer. Table 1 shows the weight ratio of the catalyst support layer.

### COMPARATIVE EXAMPLE 2

A catalyst carrier was manufactured in the same manner as in Example 1 except that a MgO (magnesia) layer was formed in place of the zirconia layer, as described below. The foam material used in Example 1 was also used here.

As a raw material used for the MgO layer, MgO ("Pyrokisuma 5Q", manufactured by Kyowa Chemical Industry Co., Ltd., average particle size 2 µm) was used without particle size controlling to prepare a slurry having a concentration of 40% by weight. The slurry was coated on the substrate to form a green film. The substrate with the green film was then calcined at 1400°C in air for two hours to form the MgO layer on the substrate. Table 1 shows the thickness and the weight ratio of the MgO layer and the weight ratio of the catalyst support layer.

### COMPARATIVE EXAMPLE 3

A catalyst carrier was manufactured in the same manner as in Example 1 except that CaO-stabilized ZrO₂ ("ZCO-GW-1", manufactured by Tomoe Engineering Co., Ltd., average particle size 45 µm) was used without particle size controlling as a raw material of a zirconia layer in place of the Y₂O₃-stabilized ZrO₂. Table 1 shows the thickness and the weight ratio of the zirconia layer and the weight ratio of the catalyst support layer. In the present comparative example, the percentage of a portion of the zirconia layer having a thickness of 3 µm or more was 25%, as shown in Table 1.

### COMPARATIVE EXAMPLE 4

A catalyst carrier was manufactured in the same manner as in Example 1 except that the thickness of the zirconia layer was reduced. Table 1 shows the thickness and the weight ratio of the zirconia layer and the weight ratio of the catalyst support layer.

To examine the effect of preventing an alkali metal or an alkaline earth metal from diffusing into a substrate, the samples according to Examples 1 to 7 and Comparative Examples 1 to 4 were further heat-treated at 1200°C in air for 50 hours. The thickness of the zirconia layer and the diffusion length of MgO into the substrate were measured before and after the heat treatment, as described below.

### [Method for measuring the thickness of the zirconia layer and the diffusion length of MgO of the catalyst support layer into the substrate]

For the samples according to Examples 1 to 7 and Comparative Examples 1 to 4, the thickness of the zirconia layer (Comparative Examples 1 and 2 had no zirconia layer.) and the diffusion length of MgO of the catalyst support layer into the substrate were measured as described below.

First, distribution of the Y₂O₃-stabilized ZrO₂ layer on the substrate surface was determined by detecting Y element (Ca element for Ca-stabilized ZrO₂ in Comparative Example 3) in a cross section of each sample, and the distribution of MgO in the alumina substrate was determined by detecting Mg element in a cross section of each sample. The elements were detected using an electron probe microanalyzer (EPMA).

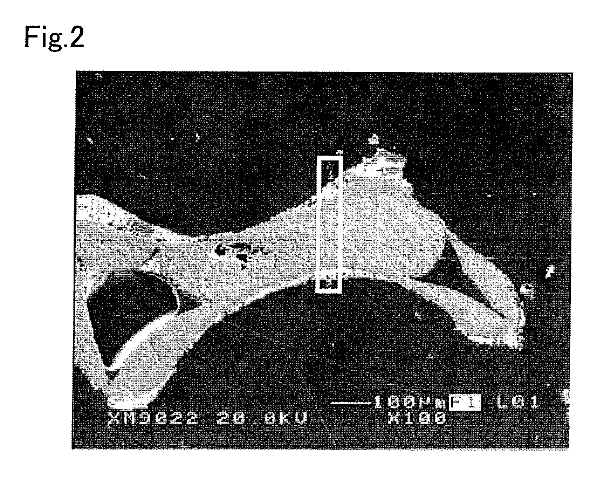

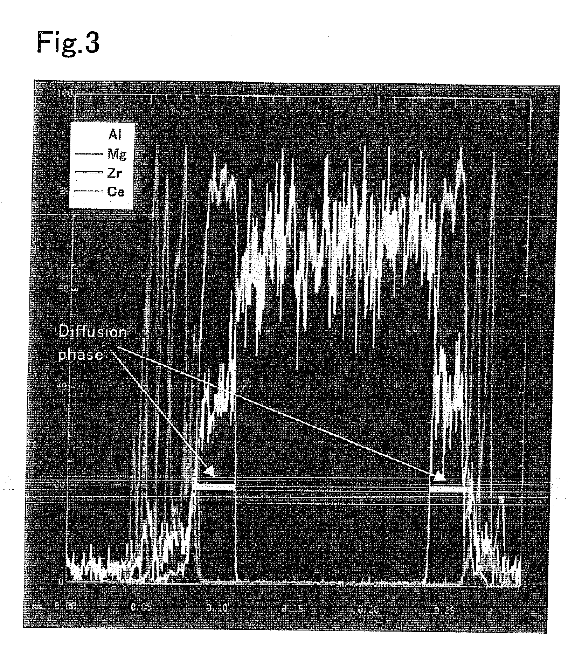

SEM photographs of the measurement areas were taken with an SEM attached to the EPMA. The thickness of the zirconia layer and the diffusion length of MgO were corrected to a direction perpendicular to the alumina substrate. The average thickness of the zirconia layer and the average diffusion length of MgO were determined from at least eight measured points. Fig. 2 is an SEM photograph of a cross section of a sample according to Comparative Example 1. Fig. 3 is a graph showing an EPMA elementary analysis of a square frame in Fig. 2.

On the basis of the measurements of the thickness of the zirconia layer, the percentage (%) of measuring points having a thickness of 3 µm or more was regarded as "the percentage of a portion of the zirconia layer having a thickness of 3 µm or more".

**Table 1**

| | Presence of zirconia layer | Material of zirconia layer | Particle size of raw material of zirconia (µm) | Number of cells layer (CPI) | Percentage of portion of zirconia layer having thickness of 3 µm or more | Average thickness of zirconia layer | Zirconia layer /catalyst carrier | Catalyst support layer /catalyst carrier | Average diffusion length of MgO in substrate | |
|---|---|---|---|---|---|---|---|---|---|---|
| | | | | | | | | | Before heat treatment | After heat treatment |
| | | | | | [%] | [µm] | [wt%] | [wt%] | [µm] | [µm] |
| Example 1 | Yes | Y-stabilized ZrO₂ | 1.0 or less | #30 | 66.7 | 4.7 | 10 | 20 | 2.6 | 7.1 |
| Example 2 | Yes | Y-stabilized ZrO₂ | 1.0 or less | #30 | 96.7 | 11.9 | 20 | 20 | 1.8 | 5.7 |
| Example 3 | Yes | Y-stabilized ZrO₂ | 1.0 or less | #30 | 95.8 | 14.7 | 30 | 20 | 1.7 | 5.0 |
| Example 4 | Yes | Y-stabilized ZrO₂ | 1.0 or less | #30 | 97.7 | 18.4 | 40 | 20 | 2.2 | 5.0 |
| Example 5 | Yes | Y-stabilized ZrO₂ | 1.0 or less | #34 | 90.5 | 9.1 | 20 | 20 | 2.6 | 6.9 |
| Example 6 | Yes | Y-stabilized ZrO₂ | 1.0 or less | #20 | 88.1 | 10.4 | 15 | 15 | 2.1 | 6.1 |
| Example 7 | Yes | Y-stabilized ZrO₂ | 10 or less | #30 | 90.0 | 8.3 | 20 | 20 | 2.7 | 4.8 |
| Comparative Example 1 | No | - | - | #30 | - | - | - | 30 | 11.0 | 20.9 |
| Comparative Example 2( 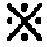 ) | No | MgO | 2 on average | #30 | - | 4.0 | 10 | 20 | 20.1 | 28.7 |
| Comparative Example 3 | Yes | Ca-stabilized ZrO₂ | 45 on average | #30 | 25.0 | 1.8 | 10 | 20 | 3.2 | 10.5 |
| Comparative Example 4 | Yes | Y-stabilized ZrO₂ | 1.0 or less | #30 | 45.3 | 2.9 | 7 | 25 | 4.5 | 9.6 |

| | | | | | | | | | | |
|---|---|---|---|---|---|---|---|---|---|---|
| ( 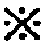 ) :In Comparative Example 2, "zirconia layer" in the table refers to "magnesia layer". | | | | | | | | | | |

Table 1 shows that, in the samples according to Examples 1 to 7, the average diffusion length of MgO of the catalyst support layer into the substrate before the heat treatment (during preparation of the carrier) was short, and even after the heat treatment at 1200°C for 50 hours, the average diffusion length of MgO into the substrate was short.

By contrast, in Comparative Example 1 which had no zirconia layer and Comparative Example 2 which had the MgO layer in place of the zirconia layer, the average dissusion length of MgO before the heat treatment (during preparation of the carrier) was longer than those in Examples 1 to 7, indicating that the diffusion of MgO occurred in the preparation step. In addition, after heat treatment the average diffusion length of MgO was further increased. As in Comparative Example 2, even when an alkaline earth metal reactive to the substrate was coated before the formation of the catalyst support layer, the preventive effect was not noticeable.

In Comparative Examples 3 and 4 in which the percentage of a portion of the zirconia layer having a thickness of 3 µm or more was smaller than 65%, although the average diffusion length of MgO before the heat treatment (during preparation of the carrier) was slightly longer than Examples 1 to 7, the heat treatment increased the average diffusion length of MgO, indicating that the effect of preventing the diffusion of MgO was small.

In Comparative Example 3, although the same amount of Ca-stabilized zirconia layer as in Example 1 was formed, the particle size of a raw material of the zirconia layer was not controlled and was as large as 45 µm. Probably because of this, the zirconia layer was not uniformly formed. Consequently, the percentage of a portion of the zirconia layer having a thickness of 3 µm or more was as low as 25%, and the average thickness of the zirconia layer was also as small as 1.8 µm, thus the effect of preventing the diffusion of MgO into the substrate was become smaller.

### [The relationship between the thickness of the zirconia layer and the diffusion length of MgO]

Fig. 5 shows the relationship between the thickness of the zirconia layer and the diffusion length of MgO based on data at each point of measurement in Examples 1 to 6 and Comparative Example 4. As shown in Fig. 5, the diffusion of MgO was significant at a thickness of the zirconia layer of 3 µm or less.
While the present invention was described in detail with particular embodiments, it is apparent to a person skilled in the art that various modifications can be made without departing from the spirit and the scope of the present invention.
The present application is based on Japanese Patent Application (Japanese Patent Application No. 2008-225969) filed on September 3, 2008, which is incorporated herein by reference in its entirety.

## Claims

1. A catalyst carrier in which a catalyst support layer containing at least one of an alkaline earth metal and an alkali metal is formed on a surface of an alumina substrate having a three-dimensional network structure,
wherein the catalyst carrier comprises a zirconia layer consisting of at least one of zirconia and stabilized zirconia disposed between the substrate and the catalyst support layer, and
wherein the percentage of a portion of the zirconia layer having a thickness of 3 µm or more accounts for at least 65% of the substrate surface.

2. The catalyst carrier according to Claim 1, wherein the zirconia layer has an average thickness in the range of 3 to 30 µm.

3. The catalyst carrier according to either preceding Claim, wherein the zirconia layer is formed from a raw material having a particle size of 5 µm or less.

4. The catalyst carrier according to any preceding Claim,
wherein the substrate consists of α-alumina.

5. The catalyst carrier according to any preceding Claim,
wherein the substrate has a network structure having 5 to 40 cells per inch.

6. The catalyst carrier according to any preceding Claim,
wherein the catalyst support layer comprises an oxide of at least one alkaline earth metal selected from the group consisting of magnesium (Mg), calcium (Ca), strontium (Sr), and barium (Ba).

7. The catalyst carrier according to any one of claims 1-5,
wherein the catalyst support layer comprises a first component, a second component, and a third component, the first component being an oxide of at least one alkaline earth metal selected from the group consisting of magnesium (Mg), calcium (Ca), strontium (Sr), and barium (Ba),
the second component being an oxide of at least one element selected from the group consisting of scandium (Sc), yttrium (Y), and lanthanoid, and
the third component being zirconia or a solid electrolyte substance mainly composed of zirconia.

8. The catalyst carrier according to any preceding Claim,
wherein the zirconia layer consists of at least one selected from the group consisting of zirconia, calcia-stabilized zirconia, magnesia-stabilized zirconia, yttria-stabilized zirconia, and ceria-stabilized zirconia.
